# EUROPEAN PATENT APPLICATION

(11) **EP 4 838 673 A2**
(43) Date of publication of application: **11.11.2026**
(21) Application number: 26207117.8
(22) Date of filing: 21.07.2022
(51) Int. Cl.: H01M 50/477

(54) **BATTERY CELL, BATTERY AND ELECTRIC DEVICE**

(62) Document number(s) of the earlier application(s) in accordance with Art. 76 EPC: 22951548.1 / 4 510 284
(71) Applicant: Contemporary Amperex Technology Co., Limited, Ningde, Fujian 352100 (CN)
(72) Inventor: CHENG, Qi, Ningde, Fujian, 352100 (CN); LIN, Chuandong, Ningde, Fujian, 352100 (CN); YANG, Kaihuan, Ningde, Fujian, 352100 (CN); MEI, Xiang, Ningde, Fujian, 352100 (CN); LI, Quankun, Ningde, Fujian, 352100 (CN)
(74) Representative: Kraus & Lederer PartGmbB

(57) **Abstract**

A battery cell, a battery, and an electrical device. The battery cell (10) includes: a shell (11) having an end opening (12); an electrode assembly (20) disposed in the shell (11); a support member (50) located between the electrode assembly (20) and the shell (11) and configured to support the electrode assembly (20); an end cover assembly (30) including a cover plate (31) and an isolation structure (32), the cover plate (31) being configured to cover the end opening (12), and the isolation structure (32) being located on a side, adjacent to the electrode assembly (20), of the cover plate (31); and an insulating member (40) located between the electrode assembly (20) and the shell (11), where the support member (50) is fixedly connected to the isolation structure (32), and the insulating member (40) is fixedly connected to at least one of the support member (50) and the isolation structure (32).

## Description

### Technical Field

The present disclosure relates to the field of battery technologies, and in particular, to a battery cell, a battery, and an electrical device.

### Background Art

Secondary batteries, especially lithium-ion batteries, have advantages such as high voltage, high specific energy, long cycle life, no pollution, wide operating temperature range, and small self-discharge, have been widely used in portable electronic devices and power devices of large new energy electric vehicles, and have significance for solving human environmental pollution and energy crisis. With the wide use of the lithium-ion batteries, the service reliability of the batteries has become a closely concerned issue for users.

### Summary

In one aspect of the present disclosure, a battery cell is provided, including: a shell having an end opening; an electrode assembly disposed in the shell; a support member located between the electrode assembly and the shell and configured to support the electrode assembly; an end cover assembly including a cover plate and an isolation structure, the cover plate being configured to cover the end opening, and the isolation structure being located on a side, adjacent to the electrode assembly, of the cover plate; and an insulating member located between the electrode assembly and the shell, where the support member is fixedly connected to the isolation structure, and the insulating member is fixedly connected to at least one of the support member and the isolation structure.

The support member is disposed between the electrode assembly and the shell and can support the electrode assembly to protect the electrode assembly, the insulating member is disposed between the electrode assembly and the shell to insulate the electrode assembly from the shell, the support member is fixedly connected to the isolation structure, and the insulating member is fixedly connected to at least one of the support member and the isolation structure, which can achieve stability in relative positions of the insulating member, the support member, and the isolation structure, thereby effectively protecting the electrode assembly and improving service reliability of the battery cell.

In some embodiments, the support member is fixedly connected to the isolation structure in a first connecting area, the insulating member is fixedly connected to at least one of the support member and the isolation structure in a second connecting area, and the first connecting area does not overlap with the second connecting area.

The first connecting area does not overlap with the second connecting area, which can reduce or eliminate possibilities of interference or mutual influence between connecting structures of the first connecting area and the second connecting area formed by different procedures, thereby improving connection reliability of the first connecting area and the second connecting area.

In some embodiments, the first connecting area includes at least one first connecting position, a minimum distance between the at least one first connecting position and the cover plate in a thickness direction of the cover plate is a first distance, the second connecting area includes at least one second connecting position, a minimum distance between the at least one second connecting position and the cover plate in the thickness direction of the cover plate is a second distance, the at least one first connecting position and the at least one second connecting position are located on the same side of the electrode assembly, and the first distance is not equal to the second distance.

For a case that the at least one first connecting position and the at least one second connecting position are located on the same side of the electrode assembly, in order to reduce or eliminate the mutual influence between the first connecting position and the second connecting position on the connecting structure, the first distance is not equal to the second distance, so that the first connecting position and the second connecting position are at different positions on the same side of the electrode assembly, thereby improving the connection reliability of the first connecting area and the second connecting area.

In some embodiments, the first distance is greater than the second distance.

For the case where the support member is first connected to the isolation structure and then the insulating member is connected to at least one of the support member and the isolation structure, the first connecting position is disposed far from the cover plate to reserve an enough space for the second connecting position and enable the insulating member to cover the cover plate as close as possible, thereby wrapping the electrode assembly more fully.

In some embodiments, the first connecting area includes at least one first connecting position, the distance between the at least one first connecting position and the cover plate in a thickness direction of the cover plate is a first distance, the second connecting area includes at least one second connecting position, the distance between the at least one second connecting position and the cover plate in the thickness direction of the cover plate is a second distance, the at least one first connecting position and the at least one second connecting position are located on the same side of the electrode assembly, and the first distance is equal to the second distance.

For the case where the at least one first connecting position and the at least one second connecting position are located on the same side of the electrode assembly, the first distance between the first connecting position and the cover plate in the thickness direction of the cover plate is equal to the second distance between the second connecting position and the cover plate in the thickness direction of the cover plate, which can reduce the space occupied by the first connecting area and the second connecting area in the thickness direction of the cover plate.

In some embodiments, the at least one first connecting position and the at least one second connecting position are spaced apart in at least one of a first direction and a second direction, the first direction is perpendicular to the thickness direction of the cover plate and perpendicular to a thickness direction of the support member, and the second direction is perpendicular to the thickness direction of the cover plate and parallel to the thickness direction of the support member.

For the first connecting position and the second connecting position located on the same side of the electrode assembly, the first connecting position and the second connecting position are spaced apart in at least one of the first direction and the second direction, which can reduce or eliminate the mutual influence between the first connecting position and the second connecting position on the connecting structure and improve the connection reliability of the first connecting area and the second connecting area.

In some embodiments, the first connecting area includes at least one first connecting position, the second connecting area includes at least one second connecting position, and the at least one first connecting position and the at least one second connecting position are located on different sides of the electrode assembly.

In this embodiment, the first connecting position and the second connecting position are disposed on different sides of the electrode assembly respectively, which can effectively eliminate the mutual influence between the first connecting position and the second connecting position on the connecting structure and improve the connection reliability of the first connecting area and the second connecting area.

In some embodiments, the support member is fixedly connected to the isolation structure by hot melting in the first connecting area, and the insulating member is fixedly connected to at least one of the support member and the isolation structure by hot melting in the second connecting area.

Both the first connecting area and the second connecting area are fixedly connected by hot melting, which is easy to implement in terms of technology. Moreover, when the first connecting area and the second connecting area do not overlap, the connecting area formed in the subsequent procedure in the first connecting area and the second connecting area can be effectively prevented from failing in stable and reliable hot melting connection due to the impact of the connecting area formed in the previous procedure, or the formed hot melting connection of the connecting area formed in the previous procedure can be effectively prevented from loosening or failing due to the impact of the connecting area formed in the subsequent procedure.

In some embodiments, the support member and the isolation structure are connected by hot melting in the first connecting area through a positioning hole and a hot melt column passing through the positioning hole.

The support member and the isolation structure are positioned in the first connecting area through the hot melt column and the positioning hole before the hot melting connection to limit relative positions of the support member and the isolation structure, thereby ensuring reliable hot melting connection between the support member and the isolation structure, and avoiding misalignment of the support member with the isolation structure during the hot melting connection, which is conducive to the accuracy of subsequent assembly. In addition, the hot melt column will form a raised height after melting. For embodiments where the first connecting area and the second connecting area do not overlap, excessive raised height caused by two times of hot melting at the same position can be prevented from hindering entry of the electrode assembly into the shell of the battery cell.

In some embodiments, a portion of the support member corresponding to the first connecting area is located on a periphery of the isolation structure, the hot melt column is disposed on a surface, adjacent to the support member, of the isolation structure, and the positioning hole is formed on a surface of the support member.

The hot melt column is disposed on the surface of the isolation structure, and the positioning hole is formed on the surface of the support member, so that the support member is located on an outer side of the isolation structure to facilitate a direct heating operation of a hot melting device on the hot melt column exposed outward from the positioning hole, and the heated hot melt column can form a close connection with the positioning hole and the support member after melting.

In some embodiments, a maximum size d1 of the hot melt column in the thickness direction of the cover plate satisfies: d1 = 1-2.5 mm.

The over-sized hot melt column will occupy a large space to affect the setting position of the second connecting area and the overlap size of the support member and the isolation structure, and the excessive overlap size will occupy the space of the battery cell to affect the size of the electrode assembly and then affect the electric quantity of the battery cell. The hot melt column with small size has low strength and is easy to break when assembled with the positioning hole. Therefore, d1 = 1-2.5 mm in this embodiment can ensure the strength of the hot melt column and reduce space occupation, so as to reserve a setting space for the second hot melting position and reduce the impact on the electric quantity of the battery cell.

In some embodiments, d1 satisfies: d1 = 1.5-2 mm.

In this embodiment, d1 = 1.5-2 mm can ensure the strength of the hot melt column, further reduce the space occupation, and reduce the impact on the electric quantity of the battery cell.

In some embodiments, in the thickness direction of the cover plate, a minimum distance d2 between the hot melt column and an end, adjacent to the cover plate, of the support member satisfies: d2 ≥ 2 mm.

d2 ≥ 2 mm can ensure the reliable hot melting connection between the hot melt column and the positioning hole, and the second connecting area for the hot melting connection between the support member and the insulating member is reserved in an area between the hot melt column and the end to ensure an enough hot melting space between the support member and the insulating member and the hot melting quality.

In some embodiments, a plurality of hot melt columns are configured, and the hot melt columns are arranged at intervals.

The hot melting connection of the plurality of first connecting positions is implemented through the plurality of hot melt columns arranged at intervals, which can effectively improve the connection reliability of the first connecting area.

In some embodiments, the support member is connected to the isolation structure by hot melting in the first connecting area through a hot melt hole.

The support member and the isolation structure are connected by hot melting through the hot melt hole, which can reduce or avoid protrusions caused by hot melting and avoid interference with the shell when the electrode assembly enters the shell. The hot melt hole is formed on the support member located on the outer side of the isolation structure to facilitate a direct heating operation of the hot melting device on the hot melt hole, so that the heated hot melt hole forms a close connection with the isolation structure after melting.

In some embodiments, a maximum size d3 of the hot melt hole in the thickness direction of the cover plate satisfies: d3 = 1-3 mm.

The over-sized hot melt hole will occupy a large space to affect the setting position of the second connecting area and affect the overlap size of the influence support member and the isolation structure, and the excessive overlap size will occupy the space of the battery cell to affect the size of the electrode assembly and then affect the electric quantity of the battery cell. The hot melt hole with small size is difficult in achieving a hot melting connection with enough strength, resulting in low connection reliability. Therefore, d3 = 1-3 mm in this embodiment can ensure enough strength of the hot melting connection and reduce space occupation, so as to reserve a setting space for the second connecting area and reduce the impact on the electric quantity of the battery cell.

In some embodiments, a plurality of hot melt holes are configured, and the hot melt holes are arranged at intervals.

The hot melting connection of the plurality of first connecting positions is implemented through the plurality of hot melt holes arranged at intervals, which can effectively improve the connection reliability of the first connecting area.

In some embodiments, a center distance d4 between adjacent hot melt holes among the plurality of hot melt holes satisfies: 1.5 * d3 ≤ d4 ≤ 3 * d3, where d3 is the maximum size of the hot melt hole in the thickness direction of the cover plate.

For embodiments where a plurality of hot melt holes are configured, if the center distance between the adjacent hot melt holes is too large, the hot melting device with a large-sized hot melting head is required, which increases manufacturing costs. However, if the center distance between the adjacent hot melt holes is too small, the hot melting area is too small to achieve reliable hot melting connections. Therefore, the center distance d4 is greater than or equal to 1.5 times d3 and less than or equal to 3 times d3 to reduce manufacturing costs and achieve reliable hot melting connections.

In some embodiments, in the thickness direction of the cover plate, a minimum distance d5 between the hot melt hole and the end, adjacent to the cover plate, of the support member satisfies: d5 ≥ 2 mm.

In this embodiment, d5 ≥ 2 mm can ensure the reliable hot melting connection through the hot melt hole, and the second connecting area for the hot melting connection between the support member and the insulating member is reserved in an area between the hot melt hole and the end to ensure an enough hot melting space between the support member and the insulating member and the hot melting quality.

In some embodiments, the insulating member and the support member are fixedly connected by hot melting in the second connecting area, and the second connecting area is located between the first connecting area and an end, adjacent to the cover plate, of the insulating member.

In a case that the support member and the isolation structure are first connected by hot melting and then the insulating member and the support member are connected by hot melting, the second connecting area is disposed between the first connecting area and the end, adjacent to the cover plate, of the insulating member, so that the insulating member can cover the cover plate as close as possible to wrap the electrode assembly more fully.

In some embodiments, in the thickness direction of the cover plate, a minimum distance d6 between the end, adjacent to the cover plate, of the support member and the cover plate is less than or equal to a minimum distance d7 between the end, adjacent to the cover plate, of the insulating member and the cover plate.

When d6 is less than or equal to d7, the support member protrudes towards or is flush with the cover plate relative to the insulating member, which can ensure the enough hot melting space between the support member and the insulating member and the hot melting quality.

In some embodiments, the insulating member and the isolation structure are fixedly connected by hot melting in the second connecting area, and the second connecting area is located between the first connecting area and the end, adjacent to the cover plate, of the insulating member.

In a case that the support member and the isolation structure are first connected by hot melting and then the insulating member and the isolation structure are connected by hot melting, the second connecting area is disposed between the first connecting area and the end, adjacent to the cover plate, of the insulating member, so that the insulating member can cover the cover plate as close as possible to wrap the electrode assembly more fully.

In some embodiments, the isolation structure includes a first segment and a second segment divided in the thickness direction of the cover plate, there is a step structure between the first segment and the second segment, the first segment is located on a side, adjacent to the electrode assembly, of the support member, the second segment is located on a side, adjacent to the cover plate, of the support member, and at least a portion of the support member is accommodated in the step structure.

The isolation structure with the step structure cooperates with the electrode assembly and the insulating member, where the step structure accommodates at least a portion of the support member, which can achieve partial spatial overlap of the support member and the isolation structure in the thickness direction of the cover plate, thereby reducing the height of the structure of the side near the cover plate, increasing the size of the electrode assembly in the battery cell, and increasing the electric quantity of the battery cell.

In some embodiments, the support member is connected to the first segment by hot melting in the first connecting area through the hot melt hole.

The support member is connected to the first segment by hot melting through the hot melt hole, which can reduce or avoid protrusions caused by hot melting and avoid interference with the shell when the electrode assembly enters the shell. The hot melt hole is formed on the support member located on the outer side of the isolation structure to facilitate a direct heating operation of the hot melting device on the hot melt hole, so that the heated hot melt hole forms a close connection with the isolation structure after melting.

In some embodiments, in the thickness direction of the cover plate, a maximum size d8 of the first segment and the maximum size d3 of the hot melt hole satisfy: 2 * d3 ≤ d8 ≤ 4 * d3.

The first segment of the isolation structure is connected to the hot melt hole on the surface of the support member by hot melting. If d8 is too large, a large space is occupied, resulting in a limited size of the electrode assembly. However, if d8 is too small, it is difficult to obtain an enough hot melting space for the first connecting area and difficult to ensure the quality of the hot melting connection. Therefore, d8 is greater than or equal to 2 times d3 and less than or equal to 4 times d3, which can achieve an enough hot melting space, obtain more reliable hot melting connections, and reduce the limitation on the size of the electrode assembly, thereby increasing the electric quantity of the battery cell.

In some embodiments, a maximum size d9 of the second segment in the thickness direction of the cover plate satisfies: 1 mm ≤ d9 ≤ 5 mm.

The second segment of the isolation structure is connected to the insulating member by hot melting. If d9 is too large, a large space is occupied, resulting in a limited size of the electrode assembly. However, if d9 is too small, it is difficult to obtain an enough hot melting space for the second connecting area and difficult to ensure the quality of the hot melting connection. Therefore, d9 satisfies 1 mm ≤ d9 ≤ 5 mm, which can achieve an enough hot melting space, obtain reliable hot melting connections, and reduce the limitation on the size of the electrode assembly, thereby increasing the electric quantity of the battery cell.

In some embodiments, d9 satisfies: 2 mm ≤ d9 ≤ 3 mm.

d9 satisfies 2 mm ≤ d9 ≤ 3 mm, which can obtain a more enough hot melting space, obtain more reliable hot melting connections, and further reduce the limitation on the size of the electrode assembly, thereby increasing the electric quantity of the battery cell.

In some embodiments, the support member is fixedly connected to an outer contour of the electrode assembly, and the insulating member wraps at least a portion of the electrode assembly and at least a portion of the support member.

The support member is fixedly connected to the outer contour of the electrode assembly and fixedly connected to the isolation structure in the end cover assembly. In this case, the electrode assembly is supported through the stiffness of the support member, and the position and deformation of the electrode assembly are limited. Moreover, the support member and the isolation structure can form a frame supporting the electrode assembly, thereby effectively suppressing movement of the electrode assembly, and avoiding risks of short-circuiting and the like caused by tearing of a tab due to the movement of the electrode assembly.

In some embodiments, the electrode assembly has a flat main body, and a thickness direction of the flat main body is perpendicular to that of the support member.

The support member, which is disposed on a narrow side of the electrode assembly, can support the side of the vertically disposed electrode assembly and isolate the shell to avoid collision and friction between the electrode assembly and the shell, thereby improving the service reliability of the battery.

In one aspect of the present disclosure, a battery is provided, including: the foregoing battery cell. The battery including the foregoing battery cell can obtain better service reliability.

In one aspect of the present disclosure, an electrical device is provided, including: the foregoing battery. The electrical device including the foregoing battery can obtain better service reliability.

### Brief description of Drawings

In order to explain the technical solutions of the embodiments of the present disclosure more clearly, the following will briefly introduce the drawings that need to be used in the embodiments of the present disclosure. Obviously, the drawings described below are only some embodiments of the present disclosure. A person of ordinary skill in the art can obtain other drawings based on the drawings without creative work.

With reference to the drawings, the present disclosure may be understood more clearly according to the following detailed description.
FIG. 1 is a schematic structural diagram of some embodiments of an electrical device according to the present disclosure;
FIG. 2 is a schematic exploded diagram of some embodiments of a battery according to the present disclosure;
FIG. 3 is a schematic exploded diagram of some embodiments of a battery cell according to the present disclosure;
FIG. 4 to FIG. 6 are schematic diagrams of distribution positions of a first connecting position and a second connecting position in some embodiments of the battery cell according to the present disclosure;
FIG. 7A is a schematic exploded diagram of an electrode assembly, an insulating member, and an end cover assembly in some embodiments of the battery cell according to the present disclosure;
FIG. 7B is a schematic enlarged diagram of an area enclosed by circle A1 in FIG. 7A;
FIG. 7C is a schematic structural diagram of FIG. 7A in a mounting state from a front view angle;
FIG. 7D is a schematic structural diagram of a B1-B1 section in FIG. 7C;
FIG. 7E is a schematic enlarged diagram of an area enclosed by circle C1 in FIG. 7D;
FIG. 7F is a schematic structural diagram of FIG. 7A in the mounting state from a top view angle;
FIG. 7G is a schematic enlarged diagram of an area enclosed by circle D1 in FIG. 7F;
FIG. 7H is a size marking diagram of FIG. 7G;
FIG. 8A is a schematic exploded diagram of an electrode assembly, an insulating member, and an end cover assembly in some embodiments of the battery cell according to the present disclosure;
FIG. 8B is a schematic enlarged diagram of an area enclosed by circle A2 in FIG. 8A;
FIG. 8C is a schematic structural diagram of FIG. 8A in a mounting state from a front view angle;
FIG. 8D is a schematic structural diagram of a B2-B2 section in FIG. 8C;
FIG. 8E is a schematic enlarged diagram of an area enclosed by circle C2 in FIG. 8D;
FIG. 8F is a schematic structural diagram of FIG. 8A in the mounting state from a top view angle;
FIG. 8G is a schematic enlarged diagram of an area enclosed by circle D2 in FIG. 8F;
FIG. 8H is a size marking diagram of FIG. 8G;
FIG. 9A is a schematic exploded diagram of an electrode assembly, an insulating member, and an end cover assembly in some embodiments of the battery cell according to the present disclosure;
FIG. 9B is a schematic enlarged diagram of an area enclosed by circle A3 in FIG. 9A;
FIG. 9C is a schematic structural diagram of FIG. 9A in a mounting state from a front view angle;
FIG. 9D is a schematic structural diagram of a B3-B3 section in FIG. 9C;
FIG. 9E is a schematic enlarged diagram of an area enclosed by circle C3 in FIG. 9D;
FIG. 9F is a schematic structural diagram of FIG. 9A in the mounting state from a top view angle;
FIG. 9G is a schematic enlarged diagram of an area enclosed by circle D3 in FIG. 9F; and
FIG. 9H is a size marking diagram of FIG. 9G.

It should be understood that the size of each part shown in the drawings is not drawn according to an actual proportional relation. Moreover, the same or similar reference signs denote the same or similar components.

### Reference numerals are described as follows:

10: battery cell; 11: shell; 12: end opening;
20: electrode assembly;
30: end cover assembly; 31: cover plate; 32: isolation structure; 33: hot melt column; 321: first segment; 322: second segment;
40: insulating member;
50: support member; 51: positioning hole; 52: hot melt hole;
60: battery; 61: box;
70: vehicle; 71: controller; 72: motor.

### Detailed Description of Embodiments

Implementations of the present disclosure will be further described in detail below in conjunction with the accompanying drawings and embodiments. The detailed description of the following embodiments and the drawings are used for illustrating the principle of the present disclosure, but cannot be used for limiting the scope of the present disclosure, that is, the present disclosure is not limited to the described embodiments.

In the description of the present disclosure, it should be noted that, unless otherwise specified, "a plurality of" means two or more; and the orientations or positional relationships indicated by the terms "upper", "lower", "left", "right", "inner", "outer", and the like are only for facilitating description of the present disclosure and simplifying the description, but do not indicate or imply that an apparatus or element referred to must have a specific orientation or be constructed and operated in a specific orientation, so the terms cannot be understood as limiting the present disclosure. In addition, the terms "first", "second", "third", and the like are for descriptive purposes only and should not be understood as indicating or implying relative importance. "Vertical" is not strictly vertical, but within an allowable range of error. "Parallel" is not strictly parallel, but within an allowable range of error.

The orientation terms appearing in the following description all indicate directions shown in the drawings, and are not intended to limit specific structures of the present disclosure. In the description of the present disclosure, it should also be noted that, unless otherwise specified and defined, the terms "mounted", "connected", and "connection" should be broadly understood, for example, the "connection" may be fixed connection, detachable connection, integral connection, direct connection, or indirect connection by a medium. Those of ordinary skill in the art may understand the specific meanings of the foregoing terms in the present disclosure according to specific circumstances.

Some implementations of the present invention will be described in detail below with reference to the drawings. The features in the following embodiments can be combined with each other on a non-conflict basis.

In a battery cell of some related technologies, an electrode assembly disposed in a shell is not effectively separated from the shell, so that the service reliability of the battery cell remains to be improved.

In view of this, the embodiments of the present disclosure provide a battery cell, a battery, and an electrical device, where the service reliability of the battery can be improved.

The battery cell in the embodiments of the present disclosure may include lithium-ion secondary batteries, lithium-ion primary batteries, lithium-sulfur batteries, sodium lithium-ion batteries, sodium-ion batteries, magnesium-ion batteries, or the like, which are not limited by the embodiments of the present disclosure. The battery cell may be cylindrical, flat, cuboid, or in other shapes, which is also not limited by the embodiments of the present disclosure.

The battery cell in the embodiments of the present disclosure may be applicable to various batteries. Batteries may be used for supplying power to electrical device such as vehicles, such as supplying power for vehicle control or driving. A battery may include a shell and a battery module, the shell is used for providing an accommodating space for the battery module, and the battery module is mounted inside the shell. The shell may be made of a metal material. The battery module may include a plurality of battery cells connected in series, in parallel, or in series and parallel. The battery cell is a minimum unit that constitutes the battery. The battery cell includes an electrode assembly that can undergo electrochemical reactions.

The battery in the embodiments of the present disclosure may be applicable to various electrical devices using batteries. The electrical device may be a mobile phone, a portable device, a notebook computer, a scooter, an electric vehicle, a ship, a spacecraft, an electric toy, or an electric tool. For example, the spacecraft includes an airplane, a rocket, a space shuttle, a spaceship, or the like; the electric toy includes a fixed or mobile electric toy, such as a game console, an electric car toy, an electric ship toy, or an electric aircraft toy; and the electric tool includes a metal cutting electric tool, a grinding electric tool, an assembly electric tool, or a railway electric tool, such as an electric drill, an electric grinder, an electric wrench, an electric screwdriver, an electric hammer, an impact electric drill, a concrete vibrator, or an electric planer. The embodiments of the present disclosure do not limit the foregoing electrical devices.

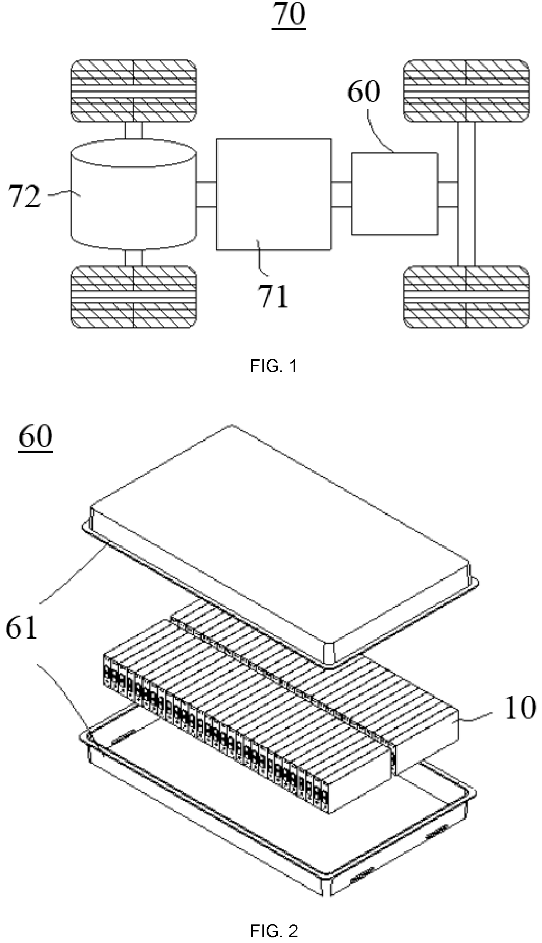

FIG. 1 is a schematic structural diagram of some embodiments of an electrical device according to the present disclosure. For convenience, the electrical device is a vehicle as an example for explanation. The vehicle 70 may be a fuel-powered vehicle, a gas-powered vehicle, or a new energy vehicle, and the new energy vehicle may be a battery electric vehicle, a hybrid vehicle, or the like. A battery 60 may be disposed at a bottom, head, or tail of the vehicle 70.

The battery 60 may be used for supplying power to the vehicle 70. For example, the battery 60 may be used as an operation power supply of the vehicle 70 for a circuit system of the vehicle 70, for example, for a working power demand of the vehicle 70 during startup, navigation and running. The battery 60 may be used not only as an operation power supply of the vehicle 70, but also as a driving power supply of the vehicle 70 to replace or partially replace fuel or natural gas to provide driving force for the vehicle 70.

Axles, wheels, a motor 72, and a controller 71 may be further disposed inside the vehicle 70. The controller 71 is used for controlling the battery 60 to supply power to the motor 72. For example, when the vehicle 70 uses the battery 60 as a driving power supply, the controller 71 can provide the motor 72 with necessary power for uniform speed and acceleration. The motor 72 is used for driving the axles to rotate, so as to drive the wheels to rotate.

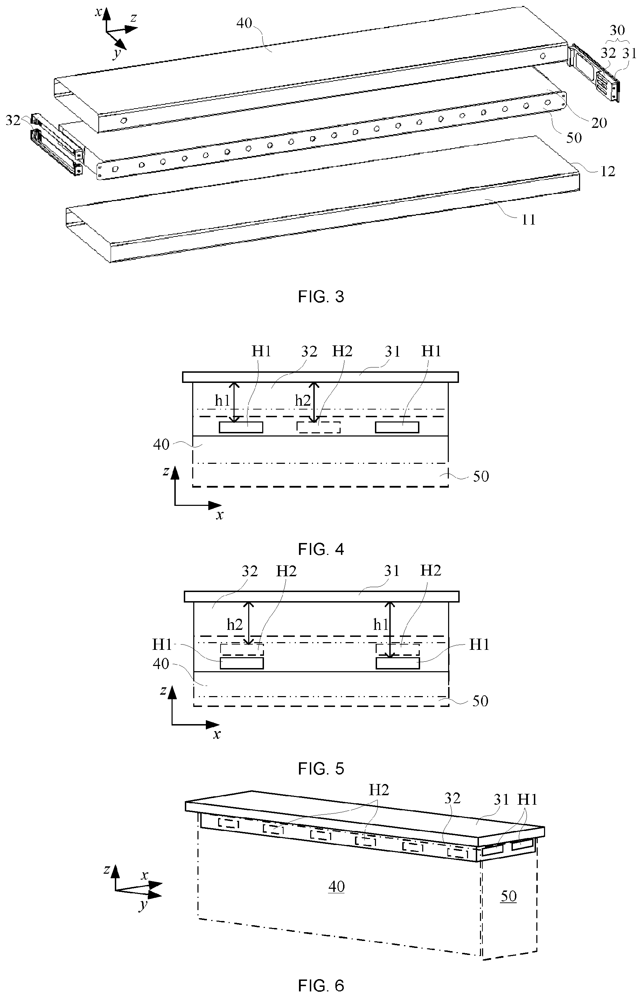

FIG. 2 is a schematic exploded diagram of some embodiments of a battery according to the present disclosure. FIG. 3 is a schematic exploded diagram of some embodiments of a battery cell according to the present disclosure. With reference to FIG. 2, in some embodiments, the battery 60 includes a box 61 and one or more battery cells 10 disposed in the box 61. The box 61 can provide cooling, sealing, and collision prevention functions for the battery cell 10, and can also avoid adverse effects of liquids or other foreign objects on the charging and discharging or safety of the battery cell.

With reference to FIG. 2, the battery cells 10 are electrically connected, such as in series, in parallel, or in series and parallel, to achieve required electrical performance parameters of the battery 60. The plurality of battery cells 10 are disposed in rows, and one or more rows of battery cells 10 may be disposed in the box as needed.

In some embodiments, the battery cells 10 of the battery 60 may be arranged in at least one of a length direction and a width direction of the box. At least one row or column of battery cells 60 may be disposed according to actual needs. One or more layers of battery cells 10 may also be disposed in a height direction of the battery 60 as needed.

In some embodiments, the plurality of battery cells 10 may first be connected in series, in parallel, or in series and parallel to form a battery module, and then a plurality of battery modules are connected in series, in parallel, or in series and parallel to form a whole accommodated in the box 61. In other embodiments, all the battery cells 10 are directly connected in series, in parallel, or in series and parallel together, and then the whole formed by all the battery cells 10 is accommodated in the box.

With reference to FIG. 3, in the embodiments of the present disclosure, the battery cell 10 includes: a shell 11, an electrode assembly 20, an end cover assembly 30, an insulating member 40, and a support member 50. The shell 11 has an end opening 12, and the end opening 12 is in communication with an inner cavity of the shell 11. The electrode assembly 20 may be disposed in the inner cavity. The end cover assembly 30 includes a cover plate 31 and an isolation structure 32 disposed on a side, adjacent to the electrode assembly 20, of the cover plate 31. The cover plate 31 is configured to cover the end opening 12. The insulating member 40 is located between the electrode assembly 20 and the shell 11.

The inner cavity of the shell 11 is used for accommodating an electrolytic solution in addition to the electrode assembly 20. The electrode assembly 20 may pass through the end opening 12 and enter the inner cavity of the shell 11 when the battery cell is mounted. The shape of the shell 11 may be determined by the shape of one or more electrode assemblies 20 accommodated in the inner cavity, for example, the shape of the shell 11 is a hollow rectangle, a hollow cube, or a hollow cylinder. The shell 11 may be made of a metal (such as aluminum or aluminum alloy) or non-metallic material (plastic) with certain hardness and strength.

The end cover assembly 30 forms a sealed cavity with the shell 11 at the end opening 12 to accommodate the electrode assembly 20. The cover plate 31 of the end cover assembly 30 may be made of a metal (such as aluminum or aluminum alloy) or non-metallic material (plastic) with certain hardness and strength. The cover plate 31 and the shell 11 may be fixedly connected by welding or bonding or through a connector. Some functional components, such as a post, a liquid injection mechanism, and a pressure relief mechanism electrically connected to the electrode assembly, may be disposed on the cover plate 31.

The isolation structure 32 is disposed between the cover plate 31 and the electrode assembly 20, and a tab of the electrode assembly 20 may pass through the isolation structure 32 and be electrically connected to the post disposed on the cover plate 31. In FIG. 3, the end openings 12 at two ends of the shell may be connected to two end cover assemblies 30 respectively. The isolation structure 32 on the left of FIG. 3 may include a top bracket and an insulating block (not shown) located on the side, adjacent to the electrode assembly 20, of the side cover plate (not shown), and the isolation structure 32 on the right may include an insulating block located on the side, adjacent to the electrode assembly 20, of the side cover plate.

The insulating block may be fixed on a surface of the side, adjacent to the electrode assembly 20, of the cover plate 31, and the insulating block in the isolation structure may be made of an insulating material such as plastic and fixedly connected to the cover plate 31. The top bracket may have a split structure, and the combined top bracket may guide the tab of the electrode assembly through and support the tab to achieve reliable electrical connection between the tab and the post.

The insulating member 40 is disposed between the electrode assembly 20 and the shell 11, and can insulate the electrode assembly 20 from the shell 11. The insulating member 40 may include an insulating thin layer (such as a Mylar film) formed by a thin film made of an insulating material. The insulating member 40 may wrap the electrode assembly 20 alone, or wrap the electrode assembly 20 and the support member 50 together.

The support member 50 is disposed between the electrode assembly 20 and the shell 11 and configured to support the electrode assembly 20. The support member located between the electrode assembly and the shell can support the electrode assembly to protect the electrode assembly 20. In some embodiments, the support member 50 is fixedly connected to an outer contour of the electrode assembly 20, and the insulating member 40 wraps at least a portion of the electrode assembly 20 and at least a portion of the support member 50. In this case, the electrode assembly 20 is supported through the stiffness of the support member 50, and the position and deformation of the electrode assembly 20 are limited. Moreover, the support member 50 and the isolation structure 32 can form a frame supporting the electrode assembly 20, thereby effectively suppressing movement of the electrode assembly 20, and avoiding risks of short-circuiting and the like caused by tearing of the tab due to the movement of the electrode assembly 20.

The support member 50 is fixedly connected to the isolation structure 32, and the insulating member 40 is fixedly connected to at least one of the support member 50 and the isolation structure 32. The support member 50 is fixedly connected to the isolation structure 32, and the insulating member 40 is fixedly connected to at least one of the support member 50 and the isolation structure 32, which can achieve stability in relative positions of the insulating member 40, the support member 50, and the isolation structure 32, thereby effectively protecting the electrode assembly and improving the service reliability of the battery cell.

The electrode assembly 20 may include a positive electrode plate, a negative electrode plate, and a separator located between the positive electrode plate and the negative electrode plate. The operation of the battery cell is implemented by migration of internal metal ions between the positive electrode plate and the negative electrode plate.

The positive electrode plate includes a positive electrode current collector and a positive electrode active material layer. The positive electrode tab is connected to or formed on the positive electrode current collector. Taking a lithium-ion battery as an example, a material of the positive electrode current collector may be aluminum, and a positive electrode active material may be a lithium material that can provide lithium ions, such as lithium cobaltate, lithium iron phosphate, ternary lithium, or lithium manganate. In a case that the positive electrode current collector and the positive electrode active material layer are bonded by a bonding material, the bonding material may be polyvinylidene fluoride (PVDF) or the like.

The negative electrode plate includes a negative electrode current collector and a negative electrode active material layer. The negative electrode tab is connected to or formed on the negative electrode current collector. Taking the lithium-ion battery as an example, a material of the negative electrode current collector may be copper, and a negative electrode active material may be a material that can store lithium ions, such as graphite, silicon, or lithium titanate. In a case that the negative electrode current collector and the negative electrode active material layer are bonded by a a bonding material, the bonding material may be carboxymethyl cellulose, epoxy resin, styrene butadiene rubber, or the like.

A material of the separator may be polypropylene (PP), polyethylene (PE), or the like. The electrolytic solution includes an electrolyte and a solvent. The electrolyte is an organic metal salt, an inorganic salt, or the like, which can provide metal ions that shuttle between the positive electrode plate and the negative electrode plate. To ensure enough over-current capacity, a plurality of positive electrode tabs may be used and laminated together, and a plurality of negative electrode tabs may be used and laminated together. Moreover, the electrode assembly may be of a wound structure or a laminated structure, and the embodiments of the present disclosure are not limited thereto.

FIG. 4 to FIG. 6 are schematic diagrams of distribution positions of a first connecting position and a second connecting position in some embodiments of the battery cell according to the present disclosure. With reference to FIG. 3 to FIG. 6, the support member 50 is fixedly connected to the isolation structure 32 in a first connecting area, and the first connecting area may include at least one first connecting position H1; and the insulating member 40 is fixedly connected to at least one of the support member 50 and the isolation structure 32 in a second connecting area, and the second connecting area may include at least one second connecting position H2.

In order to avoid interference or mutual influence between connecting structures of the first connecting area and the second connecting area formed by different processes, in some embodiments, the first connecting area and the second connecting area do not overlap, thereby reducing or eliminating possibilities of interference or mutual influence between connecting structures of the first connecting area and the second connecting area, and improving connection reliability of the first connecting area and the second connecting area.

In some embodiments, the support member 50 is fixedly connected to the isolation structure 32 by hot melting in the first connecting area, and the insulating member 40 is fixedly connected to at least one of the support member 50 and the isolation structure 32 by hot melting in the second connecting area.

Both the first connecting area and the second connecting area are fixedly connected by hot melting, which is easy to implement in terms of technology and has good connection reliability. When the first connecting area and the second connecting area do not overlap, the connecting area formed in the subsequent procedure in the first connecting area and the second connecting area can be effectively prevented from failing in stable and reliable hot melting connection due to the impact of the connecting area formed in the previous procedure, or the formed hot melting connection of the connecting area formed in the previous procedure can be effectively prevented from loosening or failing due to the impact of the connecting area formed in the subsequent procedure.

In FIG. 4 to FIG. 6, the support member 50 is connected to the isolation structure 32 in one or more first connecting positions H1 by hot melting, and the insulating member 40 is connected to at least one of the support member 50 and the isolation structure 32 in one or more second connecting positions H2 by hot melting. Considering that some lines in FIG. 4 to FIG. 6 are relatively close or overlap, the insulating member 40 is shown by dotted lines, and the support member 50 is shown by dashed lines. The first connecting position H1 and the second connecting position H2 are also shown by a solid rectangular box and a dashed rectangular box, respectively.

A hot melting process for implementing the foregoing hot melting connection may be implemented by various hot melting devices, such as an electric heating welding device or an ultrasonic welding device. Taking ultrasonic welding as an example, an insulating material such as thermoplastic plastics can be melted into a flowable liquid material after ultrasonic hot melting, and the liquid material is reshaped and cooled to form a solid hot melt, which can be used to achieve fixed connection.

The insulating member 40 wraps the electrode assembly 20 and is connected to at least one of the support member 50 and the isolation structure 32 by hot melting, so that the insulating member 40 achieves insulation protection on the electrode assembly 20 and can be reliably connected to at least one of the support member 50 and the isolation structure 32, so as to prevent the insulating member 40 from falling off the electrode assembly 20 during the use of the battery cell 10.

Considering that the hot melting connection process for the support member 50 and the isolation structure 32 and the hot melting connection process for the insulating member 40 and at least one of the support member 50 and the isolation structure 32 are completed successively in the manufacturing process of some battery cells, the first connecting area does not overlap with the second connecting area, which can eliminate mutual influence between two hot melting connection operations and improve the reliability of the hot melting connection, thereby improving the service reliability of the battery cell 10.

In FIG. 3, the electrode assembly 20 may have a flat main body. A thickness direction of the flat main body is perpendicular to that of the support member 50. The support member 50, which is disposed on a narrow side of the electrode assembly 20, can support the side of the vertically disposed electrode assembly 20 and isolate the shell 11 to avoid collision and friction between the electrode assembly 20 and the shell 11, thereby improving the service reliability of the battery.

The support member 50 may extend in a length direction of the electrode assembly 20 and be fixedly connected to at least one narrow side of the electrode assembly 20. In FIG. 3, the support member 50 may include slender plate-shaped support members, which are located on two sides of the electrode assembly 20 in a width direction and serve as side support plates. The support member 50 may be made of a material with certain strength and stiffness, such as plastic.

In FIG. 3 to FIG. 6, a first direction x is perpendicular to a thickness direction z of the cover plate 31 and perpendicular to a thickness direction of the support member 50, and a second direction y is perpendicular to the thickness direction z of the cover plate 31 and parallel to the thickness direction of the support member 50. For the electrode assembly 20 with the flat main body, the first direction x is parallel to the thickness direction of the electrode assembly 20, the second direction y is parallel to the width direction of the electrode assembly 20 and perpendicular to the thickness direction of the electrode assembly 20, and the thickness direction z of the cover plate 31 is parallel to the length direction of the electrode assembly 20.

The first connecting area H1 and the second connecting area H2 may be disposed in various ways to ensure that the first connecting area and the second connecting area do not overlap. For example, the first connecting position H1 and the second connecting position H2 are located on different sides of the electrode assembly, or the first connecting position H1 and the second connecting position H2 on the same side are separated in at least one direction.

With reference to FIG. 4 and FIG. 5, in some embodiments, the at least one first connecting position H1 and the at least one second connecting position H2 are located on the same side of the electrode assembly 20, a minimum distance between the at least one first connecting position H1 and the cover plate 31 in the thickness direction z of the cover plate 31 is a first distance h1, and a minimum distance between the at least one second connecting position H2 and the cover plate 31 in the thickness direction z of the cover plate 31 is a second distance h2. Here, the first connecting position H1 and the second connecting position H2 are located on the same side of the electrode assembly 20, indicating that at least one side of the electrode assembly 20 has both the first connecting position H1 and the second connecting position H2.

In FIG. 4, the first connecting area H1 and the second connecting area H2 located on the same side of the electrode assembly 20 can reduce the space occupied by the first connecting area and the second connecting area in the thickness direction of the cover plate 31 when the first distance h1 is equal to the second distance h2, thereby increasing the size of the electrode assembly and increasing the electric quantity of the battery cell.

Moreover, in FIG. 4, the at least one first connecting position H1 may be spaced from the at least one second connecting position H2 in the first direction x. The at least one first connecting position H1 and the at least one second connecting position H2 may alternatively be spaced apart in the second direction y.

For the first connecting position H1 and the second connecting position H2 located on the same side of the electrode assembly, the first connecting position H1 and the second connecting position H2 are spaced apart in at least one of the first direction x and the second direction y, which can reduce or eliminate the mutual influence between the first connecting position H1 and the second connecting position H2 on the connecting structure and improve the connection reliability of the first connecting area and the second connecting area.

In FIG. 5, the at least one first connecting position H1 and the at least one second connecting position H2 are located on the same side of the electrode assembly 20, and the first distance h1 is not equal to the second distance h2.

In this case, in order to reduce or eliminate the mutual influence between the first connecting position H1 and the second connecting position H2 on the connecting structure, the first distance h1 is not equal to the second distance h2, so that the first connecting position H1 and the second connecting position H2 are at different positions on the same side of the electrode assembly 20, thereby improving the connection reliability of the first connecting area and the second connecting area.

In FIG. 5, the first distance h1 may be greater than the second distance h2. For a case where the support member 50 is first connected to the isolation structure 32 and then the insulating member 40 is connected to at least one of the support member 50 and the isolation structure 32, the first connecting position H1 is disposed far from the cover plate to reserve an enough space for the second connecting position H2 and enable the insulating member 40 to cover the cover plate 31 as close as possible, thereby wrapping the electrode assembly 20 more fully.

For embodiments where the first distance h1 is not equal to the second distance h2, the at least one first connecting position H1 and the at least one second connecting position H2 may alternatively be spaced apart in at least one of the first direction x and the second direction y. This can effectively avoid overlap of the first connecting position H1 and the second connecting position H2, eliminate mutual influence between the connection operations on two sides, and improve the connection reliability of the first connecting area and the second connecting area.

With reference to FIG. 6, in some embodiments, the at least one first connecting position H1 and the at least one second connecting position H2 are located on different sides of the electrode assembly 20. For example, the first connecting position H1 is located on the side parallel to an xz plane, and the second connecting position H2 is located on the side parallel to a yz plane. Therefore, the side where the second connecting position H2 is located is different from the side where the first connecting position H1 is located.

The first connecting position H1 and the second connecting position H2 are disposed on different sides of the electrode assembly 20 respectively, which can effectively avoid the overlap of the first connecting position H1 and the second connecting position H2, eliminate the mutual influence between the connection operations on the two sides, and improve the connection reliability of the first connecting area and the second connecting area. For example, the support member 50 is connected to the isolation structure 32 by hot melting on one side or two opposite sides of the electrode assembly 20 in the second direction y, and the insulating member 40 is connected to the isolation structure 32 by hot melting on one side or two opposite sides of the electrode assembly 20 in the first direction x, thereby effectively eliminating the mutual influence between the two hot melting connections.

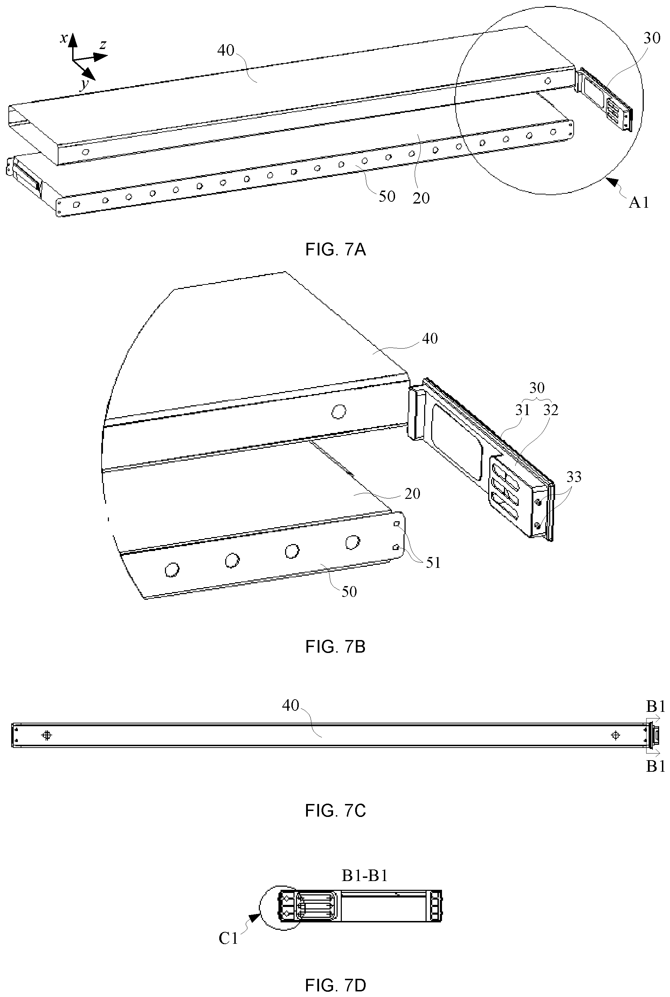

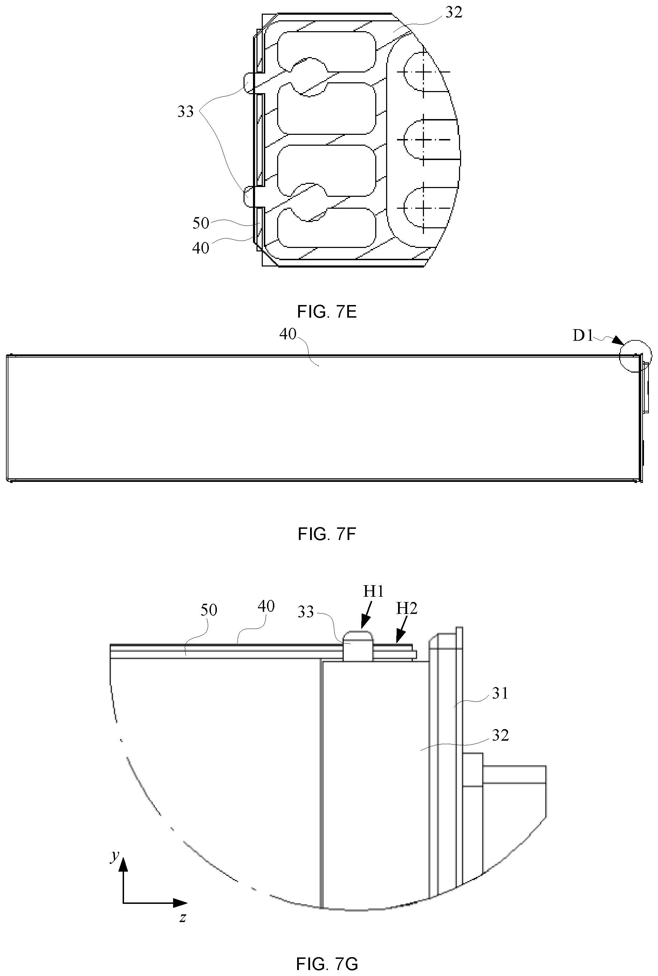

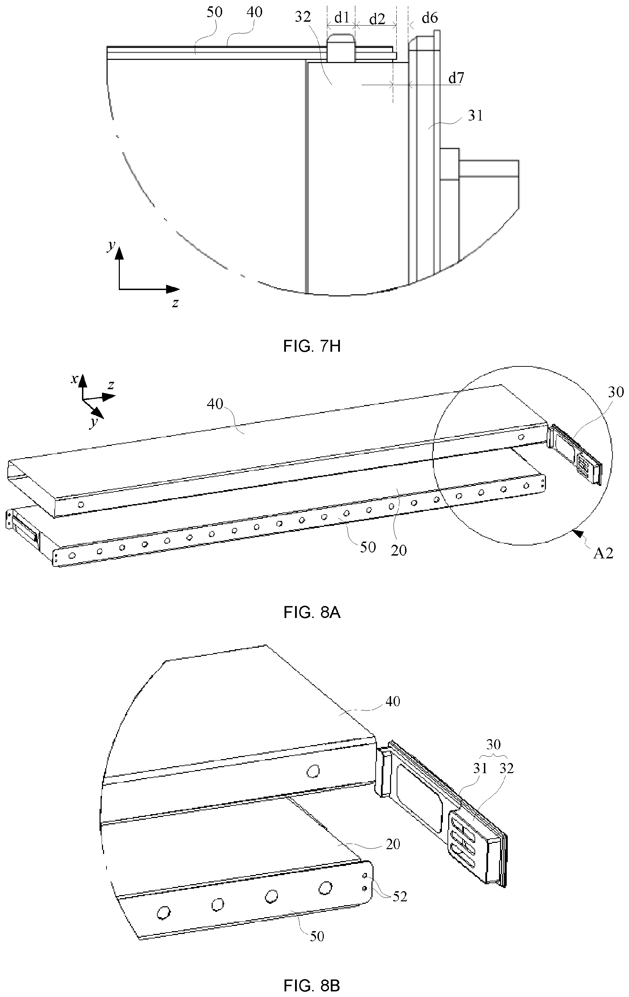

FIG. 7A is a schematic exploded diagram of an electrode assembly, an insulating member, and an end cover assembly in some embodiments of the battery cell according to the present disclosure. FIG. 7B is a schematic enlarged diagram of an area enclosed by circle A1 in FIG. 7A. FIG. 7C is a schematic structural diagram of FIG. 7A in a mounting state from a front view angle. FIG. 7D is a schematic structural diagram of a B1-B1 section in FIG. 7C. FIG. 7E is a schematic enlarged diagram of an area enclosed by circle C1 in FIG. 7D. FIG. 7F is a schematic structural diagram of FIG. 7A in the mounting state from a top view angle. FIG. 7G is a schematic enlarged diagram of an area enclosed by circle D1 in FIG. 7F. FIG. 7H is a size marking diagram of FIG. 7G.

With reference to FIG. 7A to FIG. 7H, in some embodiments, the support member 50 and the isolation structure 32 are connected by hot melting in the first connecting area through a positioning hole 51 and a hot melt column 33 passing through the positioning hole 51. In FIGs. 7B, 7E, and 7G, the hot melt column 33 may be substantially cylindrical or in other shapes, such as a prism, a cone, or a frustum. The hot melt column 33 may soften and deform under hot pressure of the hot melting device and fill the positioning hole 51, to achieve the fixed connection between the support member 50 and the isolation structure 32 at the first connecting position H1 after being cooled.

The support member 50 and the isolation structure 32 may be positioned at the at least one first connecting position H1 through the hot melt column 33 and the positioning hole 51 before the hot melting connection to limit relative positions of the support member 50 and the isolation structure 32, thereby ensuring reliable hot melting connection between the support member 50 and the isolation structure 32, and avoiding misalignment of the support member 50 with the isolation structure 32 during the hot melting connection, which is conducive to the accuracy of subsequent assembly.

The hot melt column 33 will form a raised height after melting. The insulating member 40 and the support member 50 are also fixedly connected by hot melting at the second connecting position H2 on the right side of the hot melt column 33 in FIG. 7G. In this case, the second connecting position H2 where the insulating member 40 and the support member 50 are connected by hot melting is located on the side, adjacent to the cover plate 31, of the first connecting position H1 and does not overlap with the first connecting position H1. This prevents excessive raised height caused by two times of hot melting at the same position from hindering entry of the electrode assembly 20 into the shell 11 of the battery cell 10.

With reference to FIG. 5 and FIG. 7G, in some embodiments, a portion, corresponding to the first connecting position H1, of the support member 50 is located on a side, away from the electrode assembly 20, of the isolation structure 32; the hot melt column 33 is disposed on a surface, adjacent to the support member 50, of the isolation structure 32; and the positioning hole 51 is formed on a surface of the support member 50, and runs through the support member 50 in the thickness direction of the support member 50.

The hot melt column 33 is disposed on the surface of the isolation structure 32, and the positioning hole 51 is formed on the surface of the support member 50, so that the support member 50 is located on an outer side of the isolation structure 32, to facilitate a direct heating operation of the hot melting device on the hot melt column 33 exposed outward from the positioning hole 51. The heated hot melt column 33 can form a tight connection with the positioning hole 51 and the support member 50 after melting.

In order to facilitate understanding of relative positions of the first connecting position H1 and the second connecting position H2, FIG. 7E and FIG. 7G schematically draw the support member 50, the isolation structure 32, and the insulating member 40 that have not been connected by hot melting together, to reflect the position of the hot melt column 33 that has not been melted by heating relative to the insulating member 40. With reference to FIG. 7G, in some embodiments, the insulating member 40 and the support member 50 are connected by hot melting at the at least one second connecting position H2, and the at least one second connecting position H2 is located between the at least one first connecting position H1 and an end, adjacent to the cover plate 31, of the insulating member 40.

In some embodiments, during the operation of hot melting connection between the support member 50 and the isolation structure 32, the insulating member 40 is not mounted first, but after the support member 50 and the isolation structure 32 are connected by hot melting and cooled, the insulating member 40 is mounted outside the electrode assembly 20 and located on an outer side of the support member 50, and then the hot melting connection operation between the insulating member 40 and the isolation structure 32 is performed by the hot melting device at the second hot melting position H2. The second connecting position H2 is disposed between the first connecting position H1 and the end, adjacent to the cover plate 31, of the insulating member 40, so that the insulating member 40 can cover the cover plate 31 as close as possible to wrap the electrode assembly 20 more fully.

During the hot melting connection, the over-sized hot melt column 33 will occupy a large space to affect the setting position of the second connecting position H2 and the overlap size of the support member 50 and the isolation structure 32, and the excessive overlap size will occupy the space of the battery cell 10 to affect the size of the electrode assembly 20 and then affect the electric quantity of the battery cell 10. The hot melt column 33 with small size has low strength and is easy to break when assembled with the positioning hole 51. With reference to FIG. 7H, in some embodiments, a maximum size d1 of the hot melt column 33 in the thickness direction z of the cover plate 31 satisfies: d1 = 1.1-2.5 mm. d1 = 1.1-2.5 mm can ensure the strength of the hot melt column 33 and reduce space occupation, so as to reserve a setting space for the second connecting position H2 and reduce the impact on the electric quantity of the battery cell 10.

In some embodiments, d1 further satisfies: d1 = 1.5-2 mm, which can ensure the strength of the hot melt column, further reduce the space occupation, and reduce the impact on the electric quantity of the battery cell.

In FIG. 7H, in the thickness direction z of the cover plate 31, a minimum distance d2 between the hot melt column 33 and an end, adjacent to the cover plate 31, of the support member 50 may satisfy: d2 ≥ 2 mm. If d2 is too small, the hot melting space for the second connecting position H2 is relatively limited, which affects hot melting quality to some extent. Therefore, d2 ≥ 2 mm can ensure the reliable hot melting connection between the hot melt column 33 and the positioning hole 51, and the second connecting position H2 for the hot melting connection between the support member 50 and the insulating member 40 is reserved in an area between the hot melt column 33 and the end to ensure an enough hot melting space between the support member 50 and the insulating member 40 and the hot melting quality.

In order to improve the reliability of the hot melting connection between the support member 50 and the isolation structure 32, with reference to FIG. 7B and FIG. 7E, in some embodiments, a plurality of hot melt columns 33 are configured, and the hot melt columns 33 are arranged at intervals. The hot melting connection of the plurality of first connecting positions H1 is implemented through the plurality of hot melt columns 33 arranged at intervals, which can effectively improve the connection reliability of the first connecting area. The plurality of hot melt columns 33 may be arranged at intervals in the first direction x.

With reference to FIG. 7H, in some embodiments, a minimum distance d6 between the end, adjacent to the cover plate 31, of the support member 50 and the cover plate 31 is less than or equal to a minimum distance d7 between the end, adjacent to the cover plate 31, of the insulating member 40 and the cover plate 31, namely, d6 ≤ d7. That is, the support member 50 protrudes towards or is flush with the cover plate 31 relative to the insulating member 40, which can ensure the enough hot melting space between the support member 50 and the insulating member 40 and the hot melting quality.

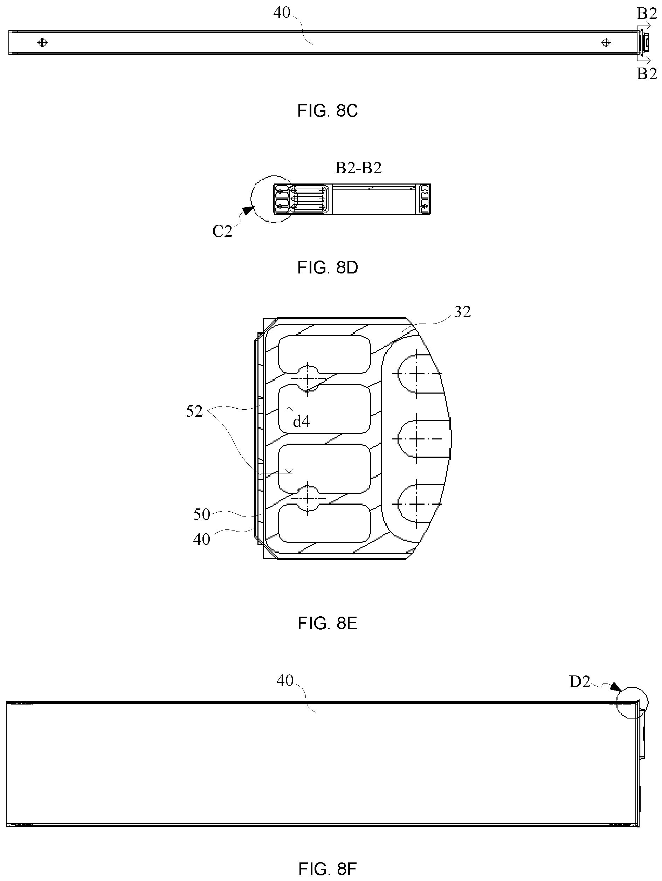

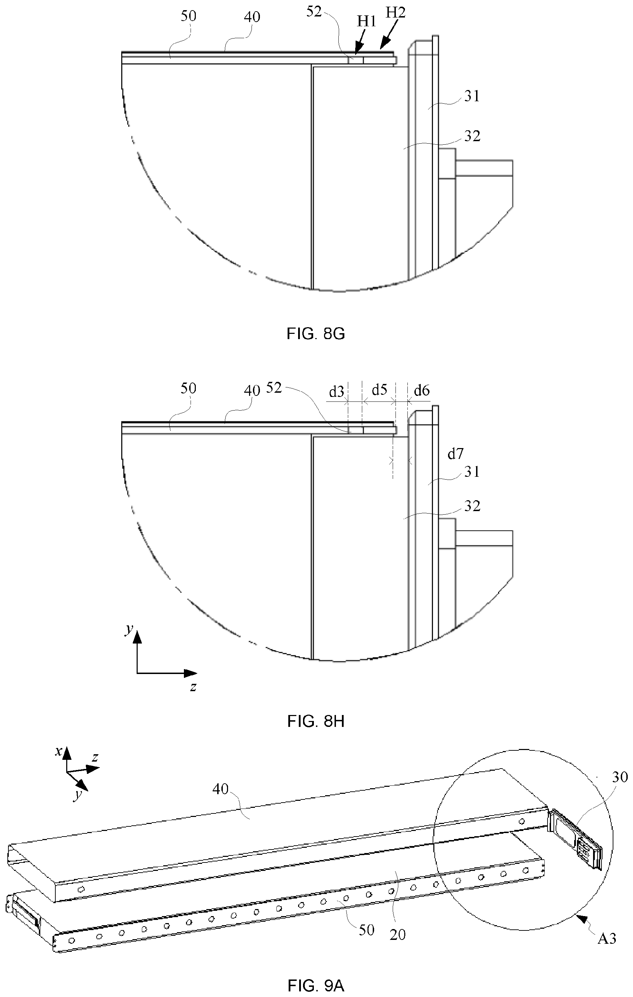

FIG. 8A is a schematic exploded diagram of an electrode assembly, an insulating member, and an end cover assembly in some embodiments of the battery cell according to the present disclosure. FIG. 8B is a schematic enlarged diagram of an area enclosed by circle A2 in FIG. 8A. FIG. 8C is a schematic structural diagram of FIG. 8A in a mounting state from a front view angle. FIG. 8D is a schematic structural diagram of a B2-B2 section in FIG. 8C. FIG. 8E is a schematic enlarged diagram of an area enclosed by circle C2 in FIG. 8D. FIG. 8F is a schematic structural diagram of FIG. 8A in the mounting state from a top view angle. FIG. 8G is a schematic enlarged diagram of an area enclosed by circle D2 in FIG. 8F. FIG. 8H is a size marking diagram of FIG. 8G.

With reference to FIG. 8A to FIG. 8H, in some embodiments, the support member 50 is connected to the isolation structure 32 by hot melting in the first connecting area through a hot melt hole 52. In FIGs. 8B, 8E, and 8G, an internal contour of the hot melt hole 52 may be substantially cylindrical or in other shapes, such as a prism, a cone, or a frustum. The hot melt hole 52 may be formed on a surface, away from the isolation structure 32, of the support member 50. The hot melt hole 52 may be a through hole or a blind hole. In this case, the hot melting device applies hot pressure to the hot melt hole 52, so that the hot melt hole 52 and the surface of the isolation structure 32 soften and melt to achieve the fixed connection between the support member 50 and the isolation structure 32 at the first connecting position H1 after cooled.

The support member 50 and the isolation structure 32 are connected by hot melting through the hot melt hole 52, which can reduce or avoid protrusions caused by hot melting and avoid interference between the hot melt protrusions and the shell 11 when the electrode assembly 20 enters the shell 11 of the battery cell 10.

In order to facilitate understanding of relative positions of the first connecting position H1 and the second connecting position H2, FIG. 8E and FIG. 8G schematically draw the support member 50, the isolation structure 32, and the insulating member 40 that have not been connected by hot melting together, to reflect the position of the hot melt hole 52 that has not been melted by heating relative to the insulating member 40. With reference to FIG. 8G, in some embodiments, the insulating member 40 and the support member 50 are connected by hot melting in the second connecting area, and the second connecting area is located between the first connecting area and the end, adjacent to the cover plate 31, of the insulating member 40. For example, in FIG. 8G, the second connecting position H2 is located between the first connecting position H1 and the end, adjacent to the cover plate 31, of the insulating member 40.

In some embodiments, during the operation of hot melting connection between the support member 50 and the isolation structure 32, the insulating member 40 is not mounted first, but after the support member 50 and the isolation structure 32 are connected by hot melting and cooled, the insulating member 40 is mounted outside the electrode assembly 20 and located on the outer side of the support member 50, and then the hot melting connection operation between the insulating member 40 and the isolation structure 32 is performed by the hot melting device at the second connecting position H2. The second connecting position H2 is disposed between the first connecting position H1 and the end, adjacent to the cover plate 31, of the insulating member 40, so that the insulating member 40 can cover the cover plate 31 as close as possible to wrap the electrode assembly 20 more fully.

During the hot melting connection, the over-sized hot melt hole 52 will occupy a large space to affect the setting position of the second connecting position H2 and the overlap size of the support member 50 and the isolation structure 32, and the excessive overlap size will occupy the space of the battery cell 10 to affect the size of the electrode assembly 20 and then affect the electric quantity of the battery cell 10. The hot melt hole 52 with small size is difficult in achieving a hot melting connection with enough strength, resulting in low connection reliability. With reference to FIG. 8H, in some embodiments, the maximum size d3 of the hot melt hole 52 in the thickness direction z of the cover plate 31 satisfies: d3 = 1-3 mm. d3 = 1-3 mm can ensure enough strength of the hot melting connection and reduce space occupation, so as to reserve a setting space for the second connecting position H2 and reduce the impact on the electric quantity of the battery cell 10.

In order to improve the reliability of the hot melting connection between the support member 50 and the isolation structure 32, with reference to FIG. 8B and FIG. 8E, in some embodiments, a plurality of hot melt holes 52 are configured, and the hot melt holes 52 are arranged at intervals. The hot melting connection of the plurality of first connecting positions H1 is implemented through the plurality of hot melt holes arranged at intervals, which can effectively improve the connection reliability of the first connecting area. The plurality of hot melt holes 52 may be arranged at intervals in the first direction x.

In FIG. 8E, a center distance d4 between adjacent hot melt holes 52 among the plurality of hot melt holes 52 may satisfy: 1.5 * d3 ≤ d4 ≤ 3 * d3. The d3 is the maximum size of the hot melt hole 52 in the thickness direction z of the cover plate. For embodiments where a plurality of hot melt holes 52 are configured, if the center distance between the adjacent hot melt holes 52 is too large, the hot melting device with a large-sized hot melting head is required, which increases manufacturing costs. However, if the center distance between the adjacent hot melt holes 52 is too small, the hot melting area is too small to achieve reliable hot melting connections. The center distance d4 is greater than or equal to 1.5 times d3 and less than or equal to 3 times d3 to reduce manufacturing costs and achieve reliable hot melting connections.

In FIG. 8H, in the thickness direction z of the cover plate 31, the minimum distance d5 between the hot melt hole 52 and the end, adjacent to the cover plate 31, of the support member 50 may satisfy: d5 ≥ 2 mm. If d5 is too small, the hot melting space for the second connecting position H2 is relatively limited, which affects hot melting quality to some extent. Therefore, d5 ≥ 2 mm can ensure the reliable hot melting connection through the hot melt hole 52, and the second connecting area for the hot melting connection between the support member 50 and the insulating member 40 is reserved in an area between the hot melt hole 52 and the end to ensure an enough hot melting space between the support member 50 and the insulating member 40 and the hot melting quality.

With reference to FIG. 8H, in some embodiments, in the thickness direction z of the cover plate 31, the minimum distance d6 between the end, adjacent to the cover plate 31, of the support member 50 and the cover plate 31 is less than or equal to the minimum distance d7 between the end, adjacent to the cover plate 31, of the insulating member 40 and the cover plate 31, namely, d6 ≤ d7. That is, the support member 50 protrudes towards or is flush with the cover plate 31 relative to the insulating member 40, which can ensure the enough hot melting space between the support member 50 and the insulating member 40 and the hot melting quality.

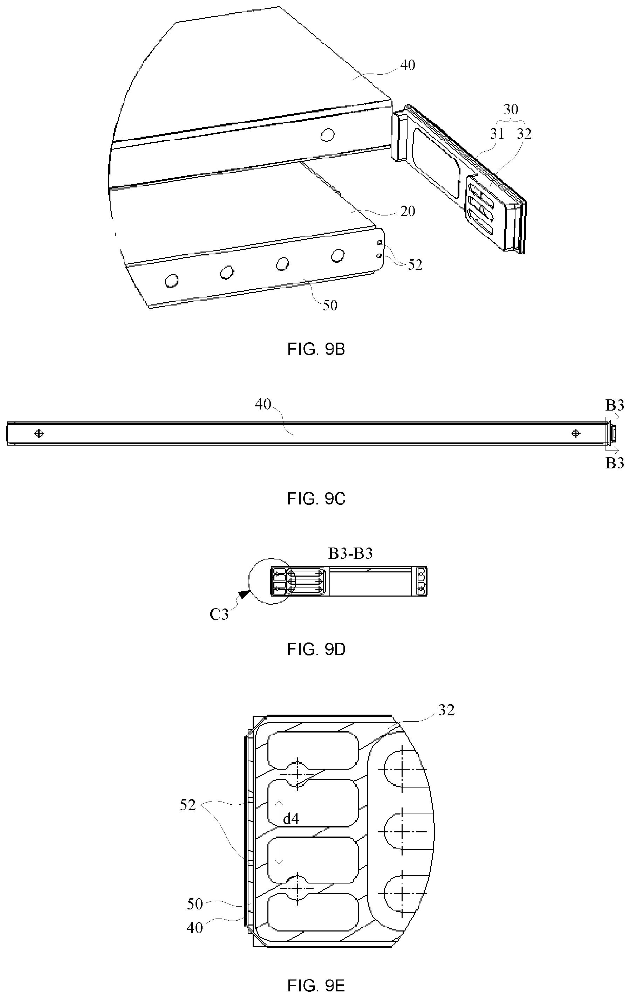

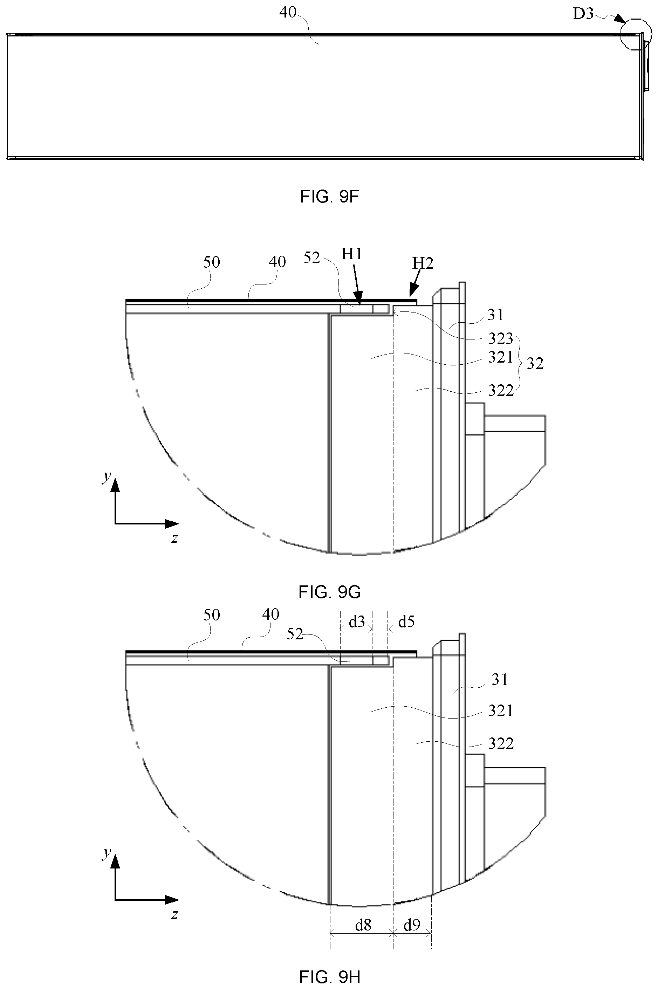

FIG. 9A is a schematic exploded diagram of an electrode assembly, an insulating member, and an end cover assembly in some embodiments of the battery cell according to the present disclosure. FIG. 9B is a schematic enlarged diagram of an area enclosed by circle A3 in FIG. 9A. FIG. 9C is a schematic structural diagram of FIG. 9A in a mounting state from a front view angle. FIG. 9D is a schematic structural diagram of a B3-B3 section in FIG. 9C. FIG. 9E is a schematic enlarged diagram of an area enclosed by circle C3 in FIG. 9D. FIG. 9F is a schematic structural diagram of FIG. 9A in the mounting state from a top view angle. FIG. 9G is a schematic enlarged diagram of an area enclosed by circle D3 in FIG. 9F. FIG. 9H is a size marking diagram of FIG. 9G.

With reference to FIG. 9A to FIG. 9H, in some embodiments, the support member 50 is fixedly connected to the isolation structure 32 by hot melting in the first connecting area, for example, fixedly connected to the isolation structure 32 by hot melting through a hot melt hole 52, or fixedly connected to the isolation structure 32 by hot melting through coordination of a hot melt column and a positioning hole. The maximum size (such as d3), setting position (such as d5), and setting method (such as d4) of the hot melt hole 52 may all be referred to the embodiments shown in FIG. 8A to FIG. 8H, and will not be elaborated here.

The insulating member 40 and the isolation structure 32 may be fixedly connected by hot melting in the second connecting area, and the second connecting area is located between the first connecting area and the end, adjacent to the cover plate 31, of the insulating member 40. For example, in FIG. 9G, the second connecting position H2 is located between the first connecting position H1 and the end, adjacent to the cover plate 31, of the insulating member 40. The second connecting area is disposed between the first connecting area and the end, adjacent to the cover plate 31, of the insulating member 40, so that the insulating member 40 can cover the cover plate 31 as close as possible to wrap the electrode assembly 20 more fully.

With reference to FIG. 9G and FIG. 9H, in some embodiments, the isolation structure 32 includes a first segment 321 and a second segment 322 divided in the thickness direction of the cover plate 31, there is a step structure 323 between the first segment 321 and the second segment 322, the first segment 321 is located on a side, adjacent to the electrode assembly 20, of the support member 50, the second segment 322 is located on a side, adjacent to the cover plate 31, of the support member 50, and at least a portion of the support member 50 is accommodated in the step structure 323.

In order to facilitate understanding of positions of the first segment 321 and the second segment 322, FIG. 9G and FIG. 9H schematically divide the first segment 321 and the second segment 322 by a dot and dash line. The step structure 323 can accommodate an end of the side, adjacent to the cover plate 31, of the support member 50, so that the first section 321 partially overlaps with the end of the support member 50 in the thickness direction z of the cover plate 31, to form a space that enables the hot melting connection.

The isolation structure 32 with the step structure 323 cooperates with the electrode assembly and the insulating member 40, where the step structure 323 accommodates at least a portion of the support member 50, which can achieve partial spatial overlap of the support member 50 and the isolation structure 32 in the thickness direction of the cover plate 31, thereby reducing the height of the structure of the side near the cover plate 31, increasing the size of the electrode assembly 20 in the battery cell 10, and increasing the electric quantity of the battery cell 10.

Maximum sizes of the first segment 321 and the second segment 322 shown in FIG. 9H in the thickness direction z of the cover plate 31 are d8 and d9, respectively. The first segment 321 of the isolation structure 32 is connected to the hot melt hole 52 on the surface of the support member 50 by hot melting. If d8 is too large, a large space is occupied, resulting in a limited size of the electrode assembly 20. However, if d8 is too small, it is difficult to obtain an enough hot melting space for the first connecting position H1 and difficult to ensure the quality of the hot melting connection. Therefore, when d8 and d3 satisfy 2 * d3 ≤ d8 ≤ 4 * d3, an enough hot melting space can be achieved, more reliable hot melting connection can be obtained, and the limitation on the size of the electrode assembly 20 can be reduced, thereby increasing the electric quantity of the battery cell 10.

The second segment 322 of the isolation structure 32 is connected to the insulating member 40 by hot melting. If d9 is too large, a large space is occupied, resulting in a limited size of the electrode assembly 20. However, if d9 is too small, it is difficult to obtain an enough hot melting space for the second connecting position H2 and difficult to ensure the quality of the hot melting connection. Therefore, when d9 satisfies 1 mm ≤ d9 ≤ 5 mm, that is, d9 satisfies a specific numerical range, an enough hot melting space can be achieved, more reliable hot melting connection can be obtained, and the limitation on the size of the electrode assembly 20 can be reduced, thereby increasing the electric quantity of the battery cell 10.

In some embodiments, d9 satisfies: 2 mm ≤ d9 ≤ 3 mm, which can obtain a more enough hot melting space, obtain more reliable hot melting connections, and further reduce the limitation on the size of the electrode assembly, thereby increasing the electric quantity of the battery cell.

In one aspect of the present disclosure, a battery is provided, including the foregoing battery cell. The battery including the foregoing battery cell can obtain better service reliability.

In one aspect of the present disclosure, an electrical device is provided, including the foregoing battery. The electrical device including the foregoing battery can obtain better service reliability.

Although the present disclosure is described with reference to the preferred embodiments, various improvements can be made and equivalents can be substituted for components therein without departing from the scope of the present disclosure. In particular, as long as there is no structural conflict, various technical features mentioned in the embodiments can be combined in any way. The present disclosure is not limited to the specific embodiments disclosed herein, but includes all technical solutions falling within the scope of the claims.

## Claims

1. A battery cell (10), comprising:
a shell (11), having an end opening (12);
an electrode assembly (20), disposed in the shell (11);
a support member (50), located between the electrode assembly (20) and the shell (11) and configured to support the electrode assembly (20);
an end cover assembly (30), comprising a cover plate (31) and an isolation structure (32), wherein the cover plate (31) is configured to cover the end opening (12), and the isolation structure (32) is located on a side of the cover plate (31) adjacent to the electrode assembly (20); and
an insulating member (40), located between the electrode assembly (20) and the shell (11),
wherein the support member (50) is fixedly connected to the isolation structure (32), and the insulating member (40) is fixedly connected to at least one of the support member (50) and the isolation structure (32);
wherein the support member (50) is fixedly connected to the isolation structure (32) by hot melting in a first connecting area, and the insulating member (40) is fixedly connected to at least one of the support member (50) and the isolation structure (32) by hot melting in a second connecting area, and the first connecting area does not overlap with the second connecting area.

2. The battery cell (10) according to claim 1, wherein the first connecting area comprises at least one first connecting position (H1), a minimum distance between the at least one first connecting position (H1) and the cover plate (31) in a thickness direction (z) of the cover plate (31) is a first distance (h1), the second connecting area comprises at least one second connecting position (H2), a minimum distance between the at least one second connecting position (H2) and the cover plate (31) in the thickness direction (z) of the cover plate (31) is a second distance (h2), the at least one first connecting position (H1) and the at least one second connecting position (H2) are located on the same side of the electrode assembly (20), and the first distance (h1) is not equal to the second distance (h2), and optionally wherein the first distance (h1) is greater than the second distance (h2).

3. The battery cell (10) according to claim 1, wherein the first connecting area comprises at least one first connecting position (H1), a minimum distance between the at least one first connecting position (H1) and the cover plate (31) in a thickness direction (z) of the cover plate (31) is a first distance (h1), the second connecting area comprises at least one second connecting position (H2), a minimum distance between the at least one second connecting position (H2) and the cover plate (31) in the thickness direction (z) of the cover plate (31) is a second distance (h2), the at least one first connecting position (H1) and the at least one second connecting position (H2) are located on the same side of the electrode assembly (20), and the first distance (h1) is equal to the second distance (h2).

4. The battery cell (10) according to claim 3, wherein the at least one first connecting position (H1) and the at least one second connecting position (H2) are spaced apart in at least one of a first direction (x) and a second direction (y), the first direction (x) is perpendicular to the thickness direction (z) of the cover plate (31) and perpendicular to a thickness direction of the support member (50), and the second direction (y) is perpendicular to the thickness direction (z) of the cover plate (31) and parallel to the thickness direction of the support member (50).

5. The battery cell (10) according to claim 1, wherein the first connecting area comprises at least one first connecting position (H1), the second connecting area comprises at least one second connecting position (H2), and the at least one first connecting position (H1) and the at least one second connecting position (H2) are located on different sides of the electrode assembly (20).

6. The battery cell (10) according to any one of claims 1 to 5, wherein the support member (50) and the isolation structure (32) are connected by hot melting in the first connecting area through a positioning hole (51) and a hot melt column (33) passing through the positioning hole (51), and optionally wherein a portion of the support member (50) corresponding to the first connecting area is located on a periphery of the isolation structure (32), the hot melt column (33) is disposed on a surface of the isolation structure (32) adjacent to the support member (50), and the positioning hole (51) is formed on a surface of the support member (50).

7. The battery cell (10) according to claim 6, wherein a maximum size (d1) of the hot melt column (33) in the thickness direction (z) of the cover plate (31) satisfies: d1 = 1.1-2.5 mm, and wherein d1 satisfies: d1 = 1.5-2 mm.

8. The battery cell (10) according to any one of claims 6-7, wherein in the thickness direction (z) of the cover plate (31), a minimum distance (d2) between the hot melt column (33) and an end of the support member (50) adjacent to the cover plate (31) satisfies: d2 ≥ 2 mm, and/or wherein a plurality of hot melt columns (33) are provided, and the plurality of the hot melt columns (33) are arranged at intervals.

9. The battery cell (10) according to claim 6, wherein the support member (50) is connected to the isolation structure (32) by hot melting in the first connecting area through a hot melt hole (52), and wherein a maximum size (d3) of the hot melt hole (52) in the thickness direction (z) of the cover plate (31) satisfies: d3 = 1-3 mm, and/or wherein a plurality of hot melt holes (52) are provided, and the plurality of the hot melt holes (52) are arranged at intervals and wherein a center distance (d4) between adjacent hot melt holes (52) among the plurality of hot melt holes (52) satisfies: 1.5 * d3 ≤ d4 ≤ 3 * d3, wherein d3 is the maximum size of the hot melt hole (52) in the thickness direction (z) of the cover plate (31).

10. The battery cell (10) according to claim 9, wherein in the thickness direction (z) of the cover plate (31), a minimum distance (d5) between the hot melt hole (52) and the end of the support member (50) adjacent to the cover plate (31) satisfies: d5 ≥ 2 mm.

11. The battery cell (10) according to any one of claims 6-10, wherein the insulating member (40) and the support member (50) are fixedly connected by hot melting in the second connecting area, and the second connecting area is located between the first connecting area and an end of the insulating member (40) adjacent to the cover plate (31) and wherein in the thickness direction (z) of the cover plate (31), a minimum distance (d6) between the end of the support member (50) adjacent to the cover plate (31) and the cover plate (31) is less than or equal to a minimum distance (d7) between the end of the insulating member (40) adjacent to the cover plate (31) and the cover plate (31); or wherein the insulating member (40) and the isolation structure (32) are fixedly connected by hot melting in the second connecting area, and the second connecting area is located between the first connecting area and the end of the insulating member (40) adjacent to the cover plate (31) and wherein the isolation structure (32) comprises a first segment (321) and a second segment (322) divided in the thickness direction (z) of the cover plate (31), a step structure (323) is provided between the first segment (321) and the second segment (322), the first segment (321) is located on a side of the support member (50) adjacent to the electrode assembly (20), the second segment (322) is located on a side of the support member (50) adjacent to the cover plate (31), and at least a portion of the support member (50) is accommodated in the step structure (323) and wherein the support member (50) is connected to the first segment (321) by hot melting in the first connecting area through the hot melt hole (52).

12. The battery cell (10) according to claim 11, wherein in the thickness direction (z) of the cover plate (31), a maximum size (d8) of the first segment (321) and the maximum size (d3) of the hot melt hole (52) satisfy: 2 * d3 ≤ d8 ≤ 4 * d3; or wherein a maximum size (d9) of the second segment (322) in the thickness direction (z) of the cover plate (31) satisfies: 1 mm ≤ d9 ≤ 5 mm and d9 satisfies: 2 mm ≤ d9 ≤ 3 mm.

13. The battery cell (10) according to any one of claims 1-12, wherein the support member (50) is fixedly connected to an outer contour of the electrode assembly (20), and the insulating member (40) wraps at least a portion of the electrode assembly (20) and at least a portion of the support member (50) and wherein the electrode assembly (20) has a flat main body, and a thickness direction of the flat main body is perpendicular to that of the support member (50).

14. A battery (60), comprising: the battery cell (10) according to any one of claims 1-13.

15. An electrical device, comprising the battery (60) according to claim 14.
